# EUROPÄISCHE PATENTSCHRIFT

(11) **EP 0 726 358 B1**
(45) Veröffentlichungstag und Bekanntmachung des Hinweises auf die Patenterteilung: **09.02.2000**
(21) Anmeldenummer: 95118185.8
(22) Anmeldetag: 18.11.1995
(51) Int. Cl.: D21H 23/32

(54) **Vorrichtung zum Imprägnieren von Bahnen aus porösem Material**
Apparatus for impregnating a web of porous material
Dispositif d'imprégnation d'une bande en matériau poreux

(30) Priorität: 07.02.1995 DE 29501919 U
(43) Veröffentlichungstag der Anmeldung: 14.08.1996
(73) Patentinhaber: VITS MASCHINENBAU GMBH, D-40764 Langenfeld (DE)
(72) Erfinder: Unger, Udo, D-42799 Leichlingen (DE); Dürr, Wolfram, D-47803 Krefeld (DE)
(74) Vertreter: Frese-Göddeke, Beate, Dr.

(56) Entgegenhaltungen:
- EP-A- 0 173 519
- WO-A-90/02611
- DE-C- 4 429 939
- US-A- 4 702 943

## Beschreibung

Die Erfindung betrifft eine Vorrichtung gemäß dem Oberbegriff des Patentanspruchs 1.

Aus der EP-A-0 173 519, von der die Erfindung ausgeht, ist es bekannt, die Imprägnierung unter erhöhtem Druck durchzuführen. Dadurch kann eine erheblich größere Menge an Tränkungsmittel in das Substrat eingebracht werden als bei der drucklosen Imprägnierung. Es wird z.B. möglich, dichtere Papiere mit geringem Saugvermögen zu imprägnieren. Ferner eröffnet sich die Möglichkeit, Tränkungsmittel mit hoher Viskosität, d.h. mit hohem Feststoffgehalt und verringertem Lösemittelanteil, einzusetzen. Die erforderliche Druckerhöhung wird insbesondere dadurch erreicht, daß die Kammer, die das Tränkungsmittel aufnimmt, sich vom Einlaufschlitz in Richtung auf den Auslaufschlitz stetig verengt. Die durchlaufende Bahn treibt die an ihrer Oberfläche anhaftende Grenzschicht des Tränkungsmittels in den verengten Bereich der Kammer. Dadurch nimmt der Druck in der Kammer in Richtung auf den Auslaufschlitz zu. Bei Durchlaufgeschwindigkeiten von etwa 45 bzw. 60 m/s werden nach Angaben der genannten Schrift in der Nähe des Auslaufschlitzes Drücke erreicht, die deutlich über 1 MPa liegen. Wenn das Tränkungsmittel über eine Druckpumpe zugeführt wird, addiert sich der von der Druckpumpe erzeugte statische Druck zu dem in der Kammer erzeugten dynamischen Druck.

Der Erfindung liegt die Aufgabe zugrunde, die Wirksamkeit der Vorrichtung noch weiter zu verbessern.

Diese Aufgabe wird durch die kennzeichnenden Merkmale des Anspruchs 1 gelöst.

Bevorzugte Ausführungen und Ausgestaltungen der Erfindung sind Gegenstand der Ansprüche 2 und 3.

Die Zeichnung dient zur Erläuterung der Erfindung anhand von vereinfacht dargestellten Ausführungsbeispielen.
- Figur 1: zeigt einen Querschnitt durch ein Ausführungsbeispiel.
- Figur 2: zeigt für das Ausführungsbeispiel der Figur 1 einen Längsschnitt durch den Trog mit angedeuteter Walze.
- Figur 3: zeigt einen Querschnitt durch ein anderes Ausführungsbeispiel.

In einen Trog 1, der im wesentlichen aus einem Grundkörper 2 und aus ebenen Stirnwänden 3, 4 besteht, taucht teilweise eine Walze 5 ein, die in einem nicht dargestellten heb- und senkbaren Obergestell drehbar gelagert und mit einem ebenfalls nicht dargestellten Antrieb versehen ist. Der Grundkörper 2 hat einen bogenförmigen Querschnitt und bildet annähernd einen Halbzylinder. Zwischen der Innenfläche des Grundkörpers 2 und der Mantelfläche der Walze 5 befindet sich eine Kammer 6. Die Kammer 6 hat einen Einlaufschlitz 7 und einen Auslaufschlitz 8 für eine zu beschichtende Papierbahn 43.

In die Kammer 6 mündet in der Nähe des Einlaufschlitzes 7 eine Zuleitung 9 für ein Tränkungsmittel ein. Die Zuleitung 9 durchdringt den Grundkörper 2 und ist mit einer nicht dargestellten Druckpumpe verbunden.

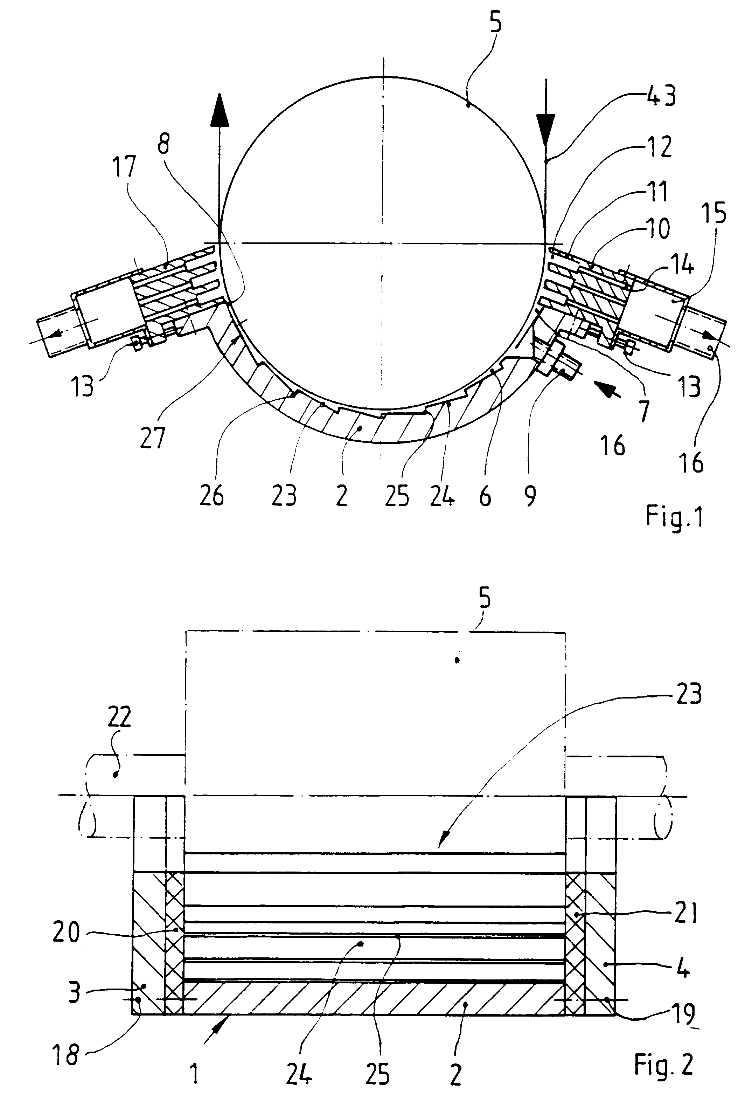

Am Einlaufschlitz 7 ist ein Dichtungsblock 10 angeordnet, der sich von der Stirnwand 3 bis zur Stirnwand 4 erstreckt. Auf der Seite, die der Walze 5 zugekehrt ist, sind abwechselnd Leisten 11 und Rillen 12 angeordnet, so daß der in Figur 1 sichtbare Querschnitt etwa einem Kamm gleicht. Die unterbrochene Linie, die im Querschnitt die Außenflächen der Leisten veranschaulicht, ist dem Walzenquerschnitt angepaßt, so daß zwischen den Außenfläche der Leisten 11 und der Mantelfläche der Walze 5 enge Spalte bestehen. Die Weite der Spalte läßt sich durch eine annähernd radiale Feineinstellung, in Figur 1 als Schraube 13 dargestellt, verändern. Jede Rille 12 ist mit mehreren über die Länge verteilten Abflußöffnungen 14 versehen, die den Dichtblock 10 durchdringen und in einen Kanal 15 einmünden, von dem ein Abflußrohr 16 ausgeht. Ein entsprechender Dichtungsblock 17 ist am Auslaufspalt 8 angebracht.

Die Stirnwände 3, 4 sind durch Schrauben 18, 19 mit dem Grundkörper 2 verbunden. Zwischen Stirnwand 3 und Grundkörper 2 ist eine Dichtungsplatte 20 eingespannt, zwischen Stirnwand 4 und Grundkörper 2 eine Dichtungsplatte 21. Die Dichtungsplatten 20, 21 sind etwa halbkreisförmig und haben im Bereich des Wellenzapfens 22 je eine Ausnehmung. Hergestellt sind sie aus einem verschleißfesten Kunststoff, der gegen Metall einen niedrigen Reibungskoeffizienten hat.

Vom Stand der Technik unterscheidet sich die Vorrichtung dadurch, daß sich der Querschnitt der Kammer 6 längs des Weges vom Einlaufschlitz 7 zum Auslaufschlitz 8 mehrmals hintereinander verengt und wieder erweitert. In dem Querschnitt gemäß Figur 1 gleicht die Linie, die die Innenwand 23 des Grundkörpers 2 darstellt, einer Sägezahnkurve. Sie hat bei dem in Figur 1 dargestellten Ausführungsbeispiel fünf Zähne, in der Praxis bis zu etwa fünfzehn Zähne.

Jeder Sägezahn hat eine in Bewegungsrichtung flach ansteigende Flanke 24 und hinter der Zahnspitze eine steil abfallende Flanke 25. Die Zahnspitze hat von dem Mantel der Walze 5 einen möglichst geringen Abstand, der aber ausreichend groß ist, um Beschädigungen der zu imprägnierenden Bahn, insbesondere Bahnrisse, zu vermeiden. Er ist z.B. durch Anheben der Walze 5 verstellbar und kann somit an die Dicke der Bahn angepaßt werden. Der maximale Abstand zwischen Walze 5 und Innenwand 23 ist deutlich größer. In der Nähe des Auslaufschlitzes 8 ist der Kammerquerschnitt in einem Wegabschnitt 27 konstant. Für diesen Abschnitt ist der Abstand zwischen Innenwand 23 und Walze 5 relativ eng, etwa wie an den Zahnspitzen.

Im Betrieb wird eine zu tränkende Papierbahn 43, die die Walze 5 etwa auf der Hälfte des Umfangs umschlingt, durch den Einlaufschlitz 7 der Kammer 6 zugeführt. Die imprägnierte Bahn verläßt die Kammer 6 durch den Auslaufschlitz 8. Über die Zuleitung 9 wird der Kammer 6 Tränkungsmittel zugeführt, vorzugsweise unter erhöhtem Druck bis etwa 1,0 MPa, vorzugsweise bis etwa 0,2 MPa.

Die Verengungen und Erweiterungen der Kammer 6 bewirken in Verbindung mit dem Schleppeffekt der hindurchbewegten Papierbahn, daß sich dem statischen Druck, mit dem das Tränkungsmittel zugeführt wird, eine ortsabhängige dynamische Druckkomponente überlagert. Über den ansteigenden Zahnflanken 24 baut sich ein Druckgradient auf, so daß der Druck in Richtung auf die Zahnspitzen ansteigt. Hinter jeder Zahnspitze fällt der Druck steil ab. Jede Stelle der Papierbahn 43 wird daher längs ihres Weges durch die Kammer 6 mehrmals wie ein Schwamm zusammengedrückt und wieder freigegeben. Dadurch wird das Tränkungsmittel intensiver in die Poren der Papierbahn hineingedrückt.

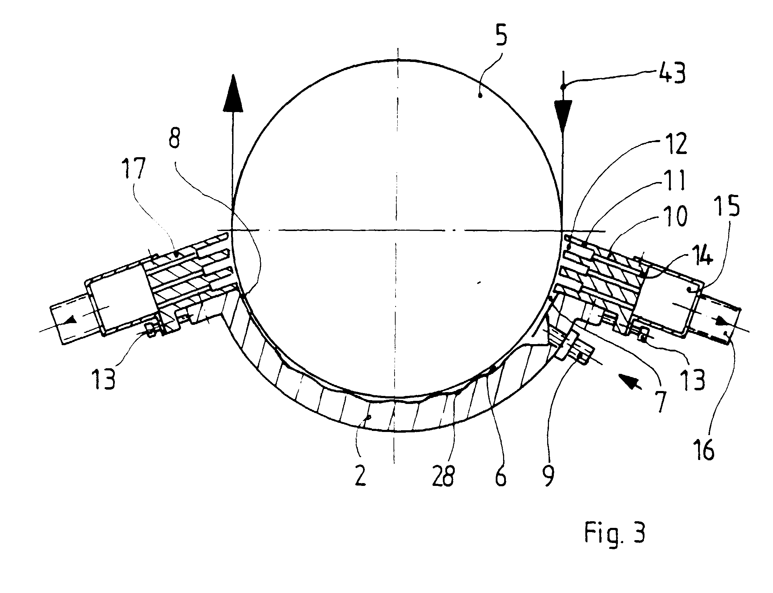

Bei dem Ausführungsbeispiel gemäß Figur 3 ist die Innenwand 28 des Grundkörpers 2 gewellt. Die Linie, die im Quersschnitt die Innenwand 28 darstellt, ist eine stetig gekrümmte Wellenlinie. Im Bereich der Wellenberge ist der Abstand zwischen Innenwand 28 und Walze 5 so gering, wie es ein störungsfreier Betrieb zuläßt.

Die Wirkungsweise ist ähnlich wie bei dem anderen Ausführungsbeispiel: es baut sich eine ortsabhängige dynamische Druckkomponente auf, die im Bereich der Verengungen größer ist als im Bereich der Erweiterungen.

## Patentansprüche

1. Vorrichtung zum Imprägnieren von Bahnen aus porösem Material, insbesondere aus Papier oder Pappe, mit einem flüssigen Tränkungsmittel, insbesondere Harz, unter erhöhtem Druck
mit einer Walze, die um eine waagerechte Achse drehbar und antreibbar ist,
mit einem Trog, in den die Walze teilweise eintaucht, wobei sich zwischen der Innenfläche des Troges und der Mantelfläche der Walze eine Kammer befindet,
mit einer in die Kammer einmündenden Zuleitung für das Tränkungsmittel,
mit einem Einlaufschlitz und einem Auslaufschlitz für die zu imprägnierende Bahn
und mit Dichtungen am Einlaufschlitz und am Auslaufschlitz,
dadurch gekennzeichnet,
daß sich die Kammer (6) auf der Strecke vom Einlaufschlitz (7) zum Auslaufschlitz (8) mehrmals hintereinander verengt und wieder erweitert.

2. Vorrichtung nach Anspruch 1, dadurch gekennzeichnet, daß die Linie, die im Querschnitt die Innenfläche (23) des Grundkörpers (2) darstellt, eine Sägezahnlinie ist.

3. Vorrichtung nach Anspruch 1, dadurch gekennzeichnet, daß die Linie, die im Querschnitt die Innenfläche (28) des Grundkörpers (2) darstellt, eine Wellenlinie ist.

## Claims

1. Apparatus for impregnating webs of porous material, in particular of paper or cardboard, with a liquid impregnating-agent, in particular resin, under elevated pressure,
having a roller which can be rotated and driven about a horizontal axis,
having a trough into which part of the roller extends, a chamber being located between the inner surface of the trough and the outer surface of the roller,
having an impregnating-agent feed-line which opens into the chamber,
having an entry slit and an delivery slit for the web to be impregnated
and having seals at the entry slit and at the delivery slit,
characterised in that,
on the stretch from the entry slit (7) to the delivery slit (8), the chamber (6) narrows and widens again several times in succession.

2. Apparatus in accordance with Claim 1, characterised in that the line which in cross-section constitutes the inner surface (23) of the base body (2) is a saw-tooth line.

3. Apparatus in accordance with Claim 1, characterised in that the line which in cross-section constitutes the inner surface (28) of the base body (2) is an undulatory line.

## Revendications

1. Dispositif pour l'imprégnation de bandes en matériau poreux, en particulier en papier ou carton, par un fluide d'imprégnation liquide, en particulier une résine, sous pression élevée,
comportant un cylindre motorisé pouvant tourner autour d'un axe horizontal,
comportant une auge dans laquelle le cylindre s'enfonce partiellement, une chambre étant située entre la surface intérieure de l'auge et la surface d'enveloppe du cylindre,
comportant un conduit d'amenée pour le fluide d'imprégnation, lequel conduit d'amenée débouche dans la chambre,
comportant une fente d'entrée et une fente de sortie pour la bande à imprégner,
et comportant des joints d'étanchéité au droit de la fente d'entrée et au droit de la chambre de sortie,
caractérisé en ce que
la chambre (6) se rétrécit et s'élargit de nouveau plusieurs fois successives sur le parcours allant de la fente d'entrée (7) à la fente de sortie (8).

2. Dispositif selon la revendication 1, caractérisé en ce que la ligne qui représente en coupe transversale la surface intérieure (23) du corps de base (2) est une ligne en dents de scie.

3. Dispositif selon la revendication 1, caractérisé en ce que la ligne qui représente la surface intérieure (28) du corps de base (2) en coupe transversale est une ligne ondulée.
